(19) Europäisches Patentamt
European Patent Office
Office européen des brevets

(11) EP 4 542 665 A1

(12) **EUROPEAN PATENT APPLICATION**
published in accordance with Art. 153(4) EPC

(43) Date of publication:
**23.04.2025 Bulletin 2025/17**

(21) Application number: **23843037.5**

(22) Date of filing: **20.07.2023**

(51) International Patent Classification (IPC):
***H01M 4/13** (2010.01)* ***H01M 4/58** (2010.01)*
***H01M 4/62** (2006.01)* ***H01M 10/052** (2010.01)*
***H01M 10/0562** (2010.01)*

(52) Cooperative Patent Classification (CPC):
**H01M 4/13; H01M 4/58; H01M 4/62; H01M 10/052; H01M 10/0562;** Y02E 60/10

(86) International application number:
**PCT/JP2023/026597**

(87) International publication number:
**WO 2024/019114 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.07.2022 JP 2022117062**

(71) Applicant: **Kureha Corporation**
**Chuo-ku**
**Tokyo 103-8552 (JP)**

(72) Inventors:
- **SUZUKI, Yumeno**
**Tokyo 103-8552 (JP)**
- **WATANABE, Keisuke**
**Tokyo 103-8552 (JP)**
- **OKADA, Kayoko**
**Tokyo 103-8552 (JP)**

(74) Representative: **Zimmermann & Partner Patentanwälte mbB**
**P.O. Box 330 920**
**80069 München (DE)**

# (54) POSITIVE ELECTRODE ACTIVE MATERIAL LAYER, ELECTRODE, AND SOLID-STATE BATTERY

(57) **To** provide: a positive electrode active material layer, with which a positive electrode having excellent adhesiveness between the positive electrode active material layer and a current collector can be formed; an electrode including the positive electrode active material layer; and a semi-solid-state battery or all-solid-state battery including the electrode. A positive electrode active material layer is used, which contains: a positive electrode active material (A); a solid electrolyte (B); and a binder (C), wherein the binder (C) is a vinylidene fluoride copolymer containing a structural unit (C-a) derived from vinylidene fluoride and a structural unit (C-b) derived from a monomer other than vinylidene fluoride, and the structural unit (C-b) derived from a monomer other than vinylidene fluoride contains a structural unit derived from at least one selected from an unsaturated dibasic acid, an unsaturated dibasic acid monoester, and a compound represented by the following formula (C-1), and
an amount of the structural unit (C-a) derived from vinylidene fluoride is 90.0 mass% or more when a total amount of the structural units contained in the vinylidene fluoride copolymer is 100.0 mass%:

EP 4 542 665 A1

[Chem. 1]

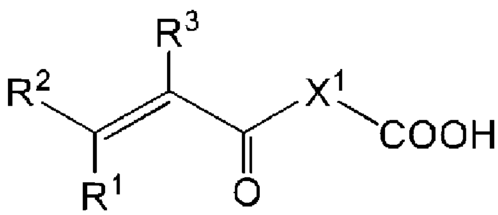

...(C-1)

where $R^1$, $R^2$ and $R^3$ are each independently a hydrogen atom, a chlorine atom or an alkyl group having from 1 to 5 carbon atoms; and $X^1$ is an atomic group having a main chain constituted of from 1 to 19 atoms and having a molecular weight of 472 or less, and containing at least one heteroatom selected from an oxygen atom and a nitrogen atom.

## Description

### TECHNICAL FIELD

The present invention relates to a positive electrode active material layer, an electrode, and a solid-state battery.

### BACKGROUND ART

In a known secondary battery containing an electrolytic solution, there is an extremely high possibility of ignition when an abnormality such as an internal short circuit of a cell occurs in a cell, thereby increasing the cell temperature. Therefore, from the perspective of improving the safety of the cell, a semi-solid-state battery or all-solid-state battery in which most or all of an electrolytic solution is replaced with a solid electrolyte has been studied. It is considered that the semi-solid-state battery or the all-solid-state battery contains an extremely small or zero amount of an electrolytic solution containing a flammable organic solvent, and thus can achieve simplification of a safety device and is excellent in production cost and productivity.

It is assumed that an active material layer of an electrode of the semi-solid-state battery or the all-solid-state battery further contains a solid electrolyte in addition to the active material, conductive auxiliary, and binder constituting the electrode active material layer of the known secondary battery.

For example, Patent Document 1 discloses that a positive electrode active material layer contains a positive electrode active material, a solid electrolyte, and an ionic liquid, and that PVDF is used as a binder, whereby a decrease in output in an all-solid-state battery can be suppressed, and a decrease in charge capacity accompanying an increase in positive electrode potential can be suppressed.

In addition, for example, Patent Document 2 discloses that a positive electrode active material layer contains a positive electrode active material, a solid electrolyte, LiFSI and $LiPF_6$ as in liquid, and PVDF as a binder, thereby suppressing corrosion of a current collector foil and achieving high charge/discharge efficiency.

### Citation List

### Patent Document

Patent Document 1: JP 2020-113444 A
Patent Document 2: JP 2020-126807 A

### SUMMARY OF INVENTION

### TECHNICAL PROBLEM

Meanwhile, according to the present inventors' studies, when a positive electrode binder used in a known secondary battery containing an electrolytic solution is used in a positive electrode including a positive electrode active material layer containing a solid electrolyte, adhesiveness between the positive electrode active material layer and a current collector may not be sufficient. This is presumably caused by insufficient adhesiveness of the positive electrode binder used in the known secondary battery to the solid electrolyte. Poor adhesiveness between the positive electrode active material layer and the current collector makes it difficult to stably realize various required characteristics such as high charge/discharge efficiency. Therefore, even in the case of a positive electrode including a positive electrode active material layer containing a solid electrolyte, a technique for improving the adhesiveness between the positive electrode active material layer and a current collector is required.

The present invention has been made in view of the above problems, and an object thereof is to provide: a positive electrode active material layer with which a positive electrode having excellent adhesiveness between the positive electrode active material layer and a current collector can be formed; an electrode including the positive electrode active material layer; and a semi-solid-state battery or all-solid-state battery including the electrode.

### SOLUTION TO PROBLEM

As a result of intensive studies to solve the above problems, the present inventors have found that the above problems can be solved by incorporating a specific vinylidene fluoride copolymer as a binder in a positive electrode active material layer containing a positive electrode active material and a solid electrolyte, and have completed the present

invention.

An aspect of the present invention relates to the following positive electrode active material layer containing a positive electrode active material (A), a solid electrolyte (B), and a binder (C); an electrode; and a semi-solid-state battery or all-solid-state battery.

[1] A positive electrode active material layer containing: a positive electrode active material (A); a solid electrolyte (B); and a binder (C), wherein the binder (C) is a vinylidene fluoride copolymer containing a structural unit (C-a) derived from vinylidene fluoride and a structural unit (C-b) derived from a monomer other than vinylidene fluoride, and

the structural unit (C-b) derived from a monomer other than vinylidene fluoride contains a structural unit derived from at least one selected from an unsaturated dibasic acid, an unsaturated dibasic acid monoester, and a compound represented by the following formula (C-1), and
an amount of the structural unit (C-a) derived from vinylidene fluoride is 90.0 mass% or more when a total amount of the structural units contained in the vinylidene fluoride copolymer is 100.0 mass%:

[Chem. 1]

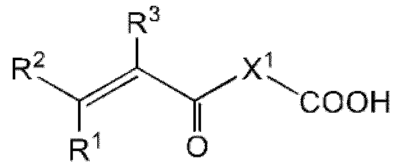
...(C-1)

where $R^1$, $R^2$ and $R^3$ are each independently a hydrogen atom, a chlorine atom or an alkyl group having from 1 to 5 carbon atoms; and $X^1$ is an atomic group having a main chain constituted of from 1 to 19 atoms and having a molecular weight of 472 or less, and containing at least one heteroatom selected from an oxygen atom and a nitrogen atom.

[2] The positive electrode active material layer according to [1], wherein the vinylidene fluoride copolymer has an inherent viscosity of 2.3 dL/g or more.

[3] The positive electrode active material layer according to [2], wherein the vinylidene fluoride copolymer contains a structural unit derived from hexafluoropropylene as a structural unit different from the structural unit (C-b), and
an amount of the structural unit derived from hexafluoropropylene is 2.0 mass% or more and 8.0 mass% or less when the total amount of the structural units contained in the vinylidene fluoride copolymer is 100.0 mass%.

[4] The positive electrode active material layer according to any one of [1] to [3], wherein the structural unit (C-b) derived from a monomer other than vinylidene fluoride contains the structural unit derived from an unsaturated dibasic acid monoester, and
the unsaturated dibasic acid monoester is monomethyl maleate.

[5] The positive electrode active material layer according to any one of [1] to [4], wherein the solid electrolyte (B) is an oxide-based solid electrolyte.

[6] The positive electrode active material layer according to [5], wherein the solid electrolyte (B) contains a material represented by the following formula (B-1):

$$Li_{1+x+y}Al_xTi_{2x}Si_yP_{3y}O_{12} \qquad (B\text{-}1)$$

where x and y satisfy $0 \le x \le 1$ and $0 \le y \le 1$.

[7] The positive electrode active material layer according to any one of [1] to [6], wherein the positive electrode active material (A) contains a lithium metal phosphate, and
the lithium metal phosphate is selected from the group consisting of $LiFePO_4$, $LiMnPO_4$, $LiCoPO_4$, and $LiNiPO_4$.

[8] An electrode including: a current collector; and the positive electrode active material layer described in any one of [1] to [7].

[9] A semi-solid-state battery or all-solid-state battery, including the electrode described in [8].

## ADVANTAGEOUS EFFECTS OF INVENTION

The present invention can provide: a positive electrode active material layer with which a positive electrode

having excellent adhesiveness between the positive electrode active material layer and a current collector can be formed; an electrode including the positive electrode active material layer; and a semi-solid-state battery or all-solid-state battery including the electrode.

## DESCRIPTION OF EMBODIMENTS

Positive Electrode Active Material Layer

The positive electrode active material layer contains a positive electrode active material (A), a solid electrolyte (B), and a binder (C).

The binder (C) contained in the positive electrode active material layer is a vinylidene fluoride copolymer containing a structural unit (C-a) derived from vinylidene fluoride and a structural unit (C-b) derived from a monomer other than vinylidene fluoride.

The structural unit (C-b) derived from a monomer other than vinylidene fluoride contains a structural unit derived from at least one selected from an unsaturated dibasic acid, an unsaturated dibasic acid monoester, and a compound represented by the formula (C-1) described later.

In the vinylidene fluoride copolymer, an amount of the structural unit (C-a) derived from vinylidene fluoride is 90.0 mass% or more when a total amount of the structural units contained in the vinylidene fluoride copolymer is 100.0 mass%. When the positive electrode active material layer contains the specific binder (C), an electrode having excellent adhesiveness between the positive electrode active material layer and the current collector can be formed.

Hereinafter, essential or optional components contained in the positive electrode active material layer will be described.

Positive Electrode Active Material (A)

The positive electrode active material (A) is not particularly limited, and, for example, a typical and known electrode active material for a positive electrode can be used. A lithium-based positive electrode active material containing at least lithium is preferable as the electrode active material for a positive electrode. Examples of the lithium-based positive electrode active material can include a positive electrode active material represented by general formula: $Li_xM_yO_z$ (M is a transition metal element, x is from 0.02 to 2.2, y is from 1 to 2, and z is from 1.4 to 4). In the general formula, M is at least one selected from the group consisting of Co, Mn, Ni, V, Fe, and Si, and may be at least one selected from the group consisting of Co, Ni, and Mn. Specific examples of such a positive electrode active material include $LiCoO_2$, $LiMnO_2$, $LiNiO_2$, $LiVO_2$, $LiNi_{1/3}Co_{1/3}Mn_{1/3}O_2$, $LiMn_2O_4$, $Li(Ni_{0.5}Mn_{1.5})O_4$, $Li_2FeSiO_4$, and $Li_2MnSiO_4$.

Examples of the positive electrode active material (A) other than those represented by general formula $Li_xM_yO_z$ above include lithium titanate (e.g., $Li_4Ti_5O_{12}$), lithium metal phosphates ($LiFePO_4$, $LiMnPO_4$, $LiCoPO_4$, $LiNiPO_4$), transition metal oxides ($V_2O_5$, $MoO_3$), $TiS_2$, LiCoN, Si, $SiO_2$, $Li_2SiO_3$, $Li_4SiO_4$, and lithium storage intermetallic compounds (e.g., $Mg_2Sn$, $Mg_2Ge$, $Mg_2Sb$, $Cu_3Sb$). Among these, lithium metal phosphates are preferable, and, among lithium metal phosphates, $LiFePO_4$ is preferable.

A form of the positive electrode active material (A) is not particularly limited and, for example, may be a particulate form or a thin film form. From the perspective of ease of handling, the shape may be a particulate form. When the positive electrode active material is particles, the average particle size (D50) of the particles is, for example, preferably 1 nm or greater and 100 $\mu$m or less, and more preferably 10 nm or greater and 30 $\mu$m or less.

From the perspective of being able to suppress a reaction between the positive electrode active material and the solid electrolyte, a coating layer containing a Li ion conductive oxide may be formed on a surface of the positive electrode active material (A).

Examples of the Li-ion conductive oxide include $LiNbO_3$, $Li_4Ti_5O_{12}$, and $Li_3PO_4$. A lower limit of a thickness of the coating layer is preferably 0.1 nm or more, and more preferably 1 nm or more. An upper limit of the thickness of the coating layer is preferably 100 nm or less, and more preferably 20 nm or less.

A content of the positive electrode active material (A) is not particularly limited, and is preferably 50 mass% or more and 98 mass% or less, more preferably 60 mass% or more and 95 mass% or less, and still more preferably 70 mass% or more and 90 mass% or less with respect to 100 mass% of the positive electrode active material layer.

Solid Electrolyte (B)

As the solid electrolyte (B), sulfide-based solid electrolytes, oxide-based solid electrolytes, and the like can be used. Among these, it is preferable to use an oxide-based solid electrolyte from the perspective of safety and stability of the electrolyte.

Examples of the sulfide-based solid electrolytes include $Li_2S-SiS_2$, $LiI-Li_2S-SiS_2$, $LiI-Li_2S-P_2S_5$, $LiI-Li_2O-Li_2S-$

$P_2S_5$, $LiI$-$Li_2S$-$P_2O_5$, $LiI$-$Li_3PO_4$-$P_2S_5$, $Li_2S$-$P_2S_5$, and $Li_3PS_4$.

Examples of the oxide-based solid electrolytes include LLTO-based compounds ($(La, Li)TiO_3$), $Li_6La_2CaTa_2O_{12}$, $Li_6La_2ANb_2O_{12}$ (A: an alkaline earth metal), $Li_2Nd_3TeSbO_{12}$, $Li_3BO_{2.5}N_{0.5}$, $Li_9SiAlO_8$, LAGP-based compounds ($Li_{1+x}Al_xGe_{2-x}(PO4)_3$ ($0 \leq x \leq 1$)), LATP-based compounds such as $Li_2O$-$Al_2O_3$-$TiO_2$-$P_2O_5$ ($Li_{1+x}Al_xTi_{2-x}(PO_4)_3$ ($0 \leq x \leq 1$)), $Li_{1+x}Ti_{2-x}Al_xSi_y(PO_4)_{3-y}$ ($0 \leq x \leq 1$ and $0 \leq y \leq 1$), $Li_{1+y}Al_xM_{2-x}(PO_4)_3$ (M is one or more elements selected from the group consisting of Ti, Ge, Sr, Sn, Zr, and Ca, $0 \leq x \leq 1$ and $0 \leq y \leq 1$), $LiTi_xZr_{2-x}(PO_4)_3$ ($0 \leq x \leq 1$), LISICON ($Li_{4-2x}Zn_xGeO_4$ ($0 \leq x \leq 1$)), LIPON-based compounds ($Li_{3+y}PO_{4-x}N_x$ ($0 \leq x \leq 1$ and $0 \leq y \leq 1$)), NASICON-based compounds (e.g., $LiTi_2(PO_4)_3$), and garnet-based compounds (e.g., $Li_7La_3Zr_2O_{12}$, $Li_{7-x}La_3Zr_{1-x}Nb_xO_{12}$ ($0 \leq x \leq 1$)).

Among the oxide-based solid electrolytes, an LATP-based compound is preferable from the perspective of having high lithium ion conductivity. The LATP-based compound preferably contains a material represented by the following formula (1):

$$Li_{1+x+y}Al_xTi_{2-x}Si_yP_{3-y}O_{12} \qquad (1)$$

where x and y satisfy $0 \leq x \leq 1$ and $0 \leq y \leq 1$.

Preferable examples of preferable oxide-based solid electrolytes other than the LATP-based compound include $Li_7La_3Zr_2O_{12}$ (LLZO), $Li_{6.75}La_3Zr_{1.75}Ta_{0.25}O_{12}$ (LLZTO), $Li_{0.33}La_{0.56}TiO_3$ (LLTO), and $Li_{1.6}Al_{0.6}Ge_{1.4}(PO_4)_3$ (LAGP).

A content of the solid electrolyte (B) is not particularly limited, and is preferably 1 mass% or more and 40 mass% or less, more preferably 2 mass% or more and 30 mass% or less, and still more preferably 3 mass% or more and 20 mass% or less with respect to 100 mass% of the positive electrode active material layer.

Binder (C)

The binder (C) is a vinylidene fluoride copolymer containing a structural unit (C-a) derived from vinylidene fluoride and a structural unit (C-b) derived from a monomer other than vinylidene fluoride.

The structural unit (C-b) derived from a monomer other than vinylidene fluoride contains a structural unit derived from at least one selected from an unsaturated dibasic acid, an unsaturated dibasic acid monoester, and a compound represented by formula (C-1) described later.

An amount of the structural unit (C-a) derived from vinylidene fluoride is 90.0 mass% or more when the total amount of the structural units contained in the vinylidene fluoride copolymer is 100.0 mass%.

The binder (C) is used for the purpose of improving adhesiveness between the solid electrolyte and other members (such as a current collector, an active material, and a conductive auxiliary).

Examples of the unsaturated dibasic acid which provides the structural unit (C-b) include fumaric acid, maleic acid, citraconic acid, and phthalic acid.

Examples of the unsaturated dibasic acid monoester which provides the structural unit (C-b) include monomethyl fumarate, monoethyl fumarate, monomethyl maleate, monoethyl maleate, monomethyl citraconate, monoethyl citraconate, monomethyl phthalate, and monoethyl phthalate.

The compound represented by formula (C-1) which provides the structural unit (C-b) is as follows.

[Chem. 2]

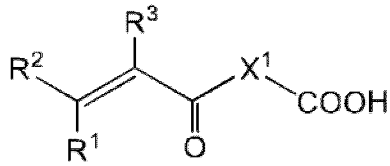

...(C-1)

In formula (C-1), $R^1$, $R^2$ and $R^3$ are each independently a hydrogen atom, a chlorine atom or an alkyl group having from 1 to 5 carbon atoms; and $X^1$ is an atomic group having a main chain constituted of from 1 to 19 atoms and having a molecular weight of 472 or less, and containing at least one heteroatom selected from an oxygen atom and a nitrogen atom.

The compound represented by the above formula (C-1) is preferably a compound represented by the following formula (C-2).

[Chem. 3]

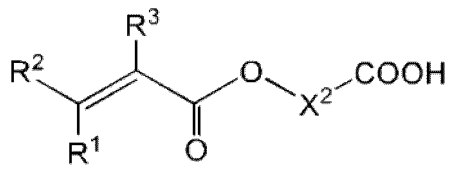

...(C-2)

In formula (C-2), $R^1$, $R^2$, and $R^3$ are the same as in the above formula (C-1); and $X^2$ is an atomic group having a main chain constituted of from 1 to 18 atoms and having a molecular weight of 456 or less.

In formulas (C-1) and (C-2), from the perspective of polymerization reactivity, in particular, $R^1$ and $R^2$ are desirably substituents having a small steric hinderance, and are preferably a hydrogen atom or an alkyl group having from 1 to 3 carbon atoms, and more preferably a hydrogen atom or a methyl group.

In formula (C-1), the molecular weight of the atomic group represented by $X^1$ is 472 or less, but is preferably 172 or less. A lower limit of the molecular weight of the atomic group represented by $X^1$ is not particularly limited, but normally, X has the form $-CH_2-$, that is, it has a molecular weight of 14. In formula (C-2), the molecular weight of the atomic group represented by $X^2$ is 456 or less, but is preferably 156 or less. A lower limit of the molecular weight of the atomic group represented by $X^2$ is not particularly limited, but normally, $X^2$ has the form $-CH_2-$, that is, it has a molecular weight of 14.

From the perspective of polymerizability, the molecular weight of the atomic group represented by $X^1$ or $X^2$ is preferably in the range described above.

Examples of the compound represented by formula (C-2) include 2-carboxyethyl acrylate, 2-carboxyethyl methacrylate, acryloyloxyethyl succinate, methacryloyloxyethyl succinate, acryloyloxypropyl succinate, methacryloyloxypropyl succinate, acryloyloxyethyl phthalic acid, and methacryloyloxyethyl phthalate.

In the vinylidene fluoride copolymer as the binder (C), a content of the structural unit (C-a) derived from vinylidene fluoride is 90.0 mass% or more, preferably 95.0 mass% or more, and more preferably 98.0 mass% or more when the total amount of the structural units contained in the vinylidene fluoride copolymer is 100.0 mass%, from the perspective of improving the adhesiveness between the solid electrolyte and other members (current collector, active material, conductive auxiliary, and the like).

In the vinylidene fluoride copolymer as the binder (C), a content of the structural unit (C-b) derived from a monomer other than vinylidene fluoride is not particularly limited, but is, for example, preferably 0.01 mass% or more and 10.0 mass% or less, more preferably 0.1 mass% or more and 5.0 mass% or less, and still more preferably 0.2 mass% or more and 2.0 mass% or less with respect to the total amount of the structural units in the vinylidene fluoride copolymer.

The vinylidene fluoride copolymer may contain a structural unit (C-c) derived from another monomer different from the monomer that provides the structural unit (C-a) and from the monomer that provides the structural unit (C-b) described above, from the perspective of improving the adhesiveness between the solid electrolyte and other members (current collector, active material, conductive auxiliary, and the like).

Examples of another monomer include structural units derived from fluorine-containing monomers other than vinylidene fluoride, and structural units derived from hydrocarbon-based monomers such as ethylene and propylene. Examples of the fluorine-containing monomer include vinyl fluoride, trifluoroethylene, tetrafluoroethylene, chlorotrifluoroethylene, hexafluoropropylene, hexafluoroethylene, fluoroalkyl vinyl ether, and perfluoroalkyl vinyl ether represented by perfluoromethyl vinyl ether. Among them, chlorotrifluoroethylene or hexafluoropropylene is preferable, and hexafluoropropylene is more preferable.

In the vinylidene fluoride copolymer as the binder (C), a content of the structural unit derived from another monomer described above is preferably 0.1 mass% or more and less than 10.0 mass%, and more preferably 2.0 mass% or more and 8.0 mass% or less when the total amount of the structural units contained in the vinylidene fluoride copolymer is 100.0 mass%. In a case where the vinylidene fluoride copolymer as the binder (C) contains the structural unit derived from another monomer described above, the content of the structural unit (C-a) derived from vinylidene fluoride is 90.0 mass% or more, preferably 91.0 mass% or more, and more preferably 92.0 mass% or more when the total amount of the structural units contained in the vinylidene fluoride copolymer is 100.0 mass%, from the perspective of improving the adhesiveness between the solid electrolyte and other members (current collector, active material, conductive auxiliary, and the like). **The** content of the structural unit (C-b) derived from a monomer other than vinylidene fluoride is preferably 0.01 mass% or more and 2.0 mass% or less, more preferably 0.1 mass% or more and 1.5 mass% or less, and still more preferably 0.2 mass% or more and 0.8 mass% or less.

An inherent viscosity of the vinylidene fluoride copolymer as the binder (C) is preferably 2.3 dL/g or more, and more preferably 2.5 dL/g or more, from the perspective of improving the adhesiveness between the solid electrolyte and other members (current collector, active material, conductive auxiliary, and the like).

A content of the binder (C) is not particularly limited, and is preferably 1 mass% or more and 40 mass% or less, more preferably 2 mass% or more and 30 mass% or less, and still more preferably 3 mass% or more and 20 mass% or less with respect to 100 mass% of the positive electrode active material layer.

Method for Producing Binder (C)

A method for producing the binder (C) is not particularly limited, and is normally a method such as suspension polymerization, emulsion polymerization, or solution polymerization. From the viewpoint of ease of post-treatment, suspension polymerization in an aqueous system and emulsion polymerization are preferable, and suspension polymerization in an aqueous system is more preferable.
The suspension polymerization method in an aqueous system is not particularly limited, and examples thereof include a method in which the monomers used in polymerization are polymerized in an aqueous medium in the presence of a suspending agent, a polymerization initiator, a chain transfer agent, and the like.
The suspending agent is not particularly limited, and examples thereof include methyl cellulose, methoxylated methyl cellulose, propoxylated methyl cellulose, hydroxyethyl methyl cellulose, hydroxypropyl methyl cellulose, polyvinyl alcohol, polyethylene oxide, and gelatin. An amount of the suspending agent used is not particularly limited. For example, the amount is preferably 0.005 parts by mass or more and 1.0 parts by mass or less and more preferably 0.01 parts by mass or more and 0.4 parts by mass or less with respect to 100.0 parts by mass of all the monomers used in polymerization.
The polymerization initiator is not particularly limited, and examples thereof include diisopropyl peroxydicarbonate, di-n-propyl peroxydicarbonate, di-n-heptafluoropropyl peroxydicarbonate, isobutyryl peroxide, di(chlorofluoroacyl) peroxide, di(perfluoroacyl) peroxide, and t-butyl peroxypivalate. An amount of the polymerization initiator used is not particularly limited. For example, the amount is preferably 0.05 parts by mass or more and 5 parts by mass or less and more preferably 0.15 parts by mass or more and 2 parts by mass or less with respect to 100.0 parts by mass of all the monomers used in polymerization.
The chain transfer agent is not particularly limited, and examples thereof include ethyl acetate, propyl acetate, acetone, and diethyl carbonate.
In addition, a charged amount of the monomers used in polymerization is usually from 1:1 to 1:10 and preferably from 1:2 to 1:5 in terms of the mass ratio of all the monomers: water. The polymerization conditions such as polymerization temperature and polymerization time when the suspension polymerization is performed are not particularly limited and, for example, a known polymerization conditions may be employed. The polymerization temperature T is selected as appropriate according to the 10-hour half-life temperature T10 of the polymerization initiator, and is normally selected in the range of $T10 - 25°C \leq T \leq T10 + 25°C$. For example, T10 of t-butyl peroxypivalate and diisopropyl peroxydicarbonate are 54.6°C and 40.5°C, respectively (refer to product catalog of NOF Corporation). Therefore, in polymerization using t-butyl peroxypivalate and diisopropyl peroxydicarbonate as the polymerization initiator, the polymerization temperature T is selected as appropriate in a range of $29.6°C \leq T \leq 79.6°C$ or $15.5°C \leq T \leq 65.5°C$, respectively. Although the polymerization time is not particularly limited, the polymerization time is preferably from 1 to 24 hours considering productivity, for example.

Other components

The positive electrode active material layer may contain components (hereinafter, also referred to as "other components") other than the above-described positive electrode active material (A), solid electrolyte (B), and binder (C) as long as the effects of the present invention are not impaired. As the other components, all known additives can be used, and examples thereof include a conductive auxiliary, an insulating inorganic filler such as alumina, magnesia, or silica, an insulating organic filler such as polytetrafluoroethylene, polyimide, or polyacrylonitrile, a plasticizer such as ethylene carbonate, propylene carbonate, or ethyl methyl carbonate, a Li salt such as $LiPF_6$, LiFSI, or LiTFSI, a dispersant, a flame retardant, and an antifoaming agent.
Examples of the conductive auxiliary (D) include carbon black and carbon nanotubes. One of these may be used alone, or two or more thereof may be used in combination.
A content of the conductive auxiliary (D) is not particularly limited, but is preferably 0.05 mass% or more and 15 mass% or less, more preferably 0.1 mass% or more and 10 mass% or less, and still more preferably 0.5 mass% or more and 8.0 mass% or less with respect to 100.0 mass% of the positive electrode active material layer.

Electrode

The electrode means a positive electrode. The electrode includes a current collector and the above-described positive electrode active material layer. When the electrode includes the positive electrode active material layer, the electrode exhibits an effect of suppressing the interface resistance between the current collector and the positive electrode

active material layer.

Current collector

A current collector is a terminal for extracting electricity. A material for each of the current collectors is not particularly limited, and metal foil, metal mesh, or the like of aluminum, copper, iron, stainless steel, steel, nickel, titanium, or the like can be used. In addition, the current collector may be one produced by applying the metal foil, metal mesh, or the like on a surface of a medium.

A bulk density of the electrode is not particularly limited, and is, for example, preferably 1.5 g/cm3 or more and 5 g/cm3 or less.

A basis weight of the electrode is not particularly limited, and is, for example, preferably 20 $g/m^2$ or more and 1000 $g/m^2$ or less.

Method for Producing Electrode

Examples of a method for producing the electrode include an aspect including: mixing the positive electrode active material (A), the solid electrolyte (B), the binder (C), other components if necessary, and a nonaqueous solvent (S) to prepare a positive electrode slurry; and applying the obtained positive electrode slurry to a current collector, and then drying the slurry. That is, in the above embodiment, through drying the positive electrode slurry, the positive electrode active material layer is prepared, and the electrode is also prepared.

Examples of the nonaqueous solvent (S) include N-methyl-2-pyrrolidone (also called "NMP" hereafter), dimethylformamide, N-dimethylformamide, N,N-dimethylacetamide, dimethyl sulfoxide, N,N-dimethyl sulfoxide, hexamethylphosphoramide, dioxane, tetrahydrofuran, tetramethylurea, triethyl phosphate, trimethyl phosphate, acetone, cyclohexanone, methyl ethyl ketone, and tetrahydrofuran. One of these may be used alone, or two or more thereof may be used in combination.

A method of application is not particularly limited. For example, a doctor blade method, a reverse roll method, a comma bar method, a gravure method, an air knife method, a die coating method, and a dip coating method can be used.

A drying temperature is, for example, preferably 80°C or higher and 300°C or lower, more preferably 90°C or higher and 200°C or lower, and still more preferably 100°C or higher and 180°C or lower.

The drying time is, for example, preferably 10 seconds or more and 300 minutes or less, and more preferably 1 minute or more and 200 minutes or less.

The drying may be performed multiple times at various temperatures. During the drying, pressure may be applied.

All-solid-state Battery

The all-solid-state battery includes the electrode of the above-described embodiment. As the all-solid-state battery, typical and known members other than the positive electrode, for example, a negative electrode, a separator, and the like can be used.

Semi-solid-state Battery

The semi-solid-state battery includes the electrode of the above-described embodiment. As the semi-solid-state battery, typical and known members other than the positive electrode, for example, a negative electrode, a separator, and the like can be used. An amount of the electrolytic solution contained in the semi-solid-state battery is preferably from 1 to 95%, more preferably from 1 to 90%, and still more preferably from 1 to 80%, when a volume of the electrolytic solution contained in a known secondary battery is 100%.

**EXAMPLES**

The present invention will be described in further detail hereafter based on Examples and Comparative Examples, but the present invention is not limited to the following examples.

Examples 1 to 5 and Comparative Examples 1 to 3

Material Used

In Examples and Comparative Examples, the following A1 was used as the positive electrode active material (A).

A1: $LiFePO_4$

In Examples and Comparative Examples, the following B1 was used as the solid electrolyte (B).
B1: $Li_{1+x+y}Al_xTi_{2x}Si_yP_{3y}O_{12}$ (LATP) (available from Ohara Inc., "LICGC™ PW-01 (particle size: 1 μm)")

In Examples and Comparative Examples, the following C1 to C8 were prepared and used as the binder (C). The inherent viscosity of each of the prepared binders was measured according to the following method.
The monomers used are as follows.

(1) Monomer providing structural unit (C-a) derived from vinylidene fluoride: vinylidene fluoride (VDF)
(2) Monomer providing structural unit (C-b) derived from monomer other than vinylidene fluoride:

monomethyl maleate (MMM) (unsaturated dibasic acid monoester)
acryloyloxypropyl succinate (APS) (compound represented by formula (C-2) above)

(3) Monomer providing structural unit (C-c):
hexafluoropropylene (HFP)

Measurement of inherent viscosity

Each binder (80 mg) was dissolved in 20 ml of N,N-dimethylformamide to prepare a binder-containing solution. Then, a viscosity $\eta_1$ of the binder-containing solution was measured in a thermostatic bath at 30°C using an Ubbelohde viscometer. Similarly, the viscosity $\eta_0$ of N,N-dimethylformamide was measured in a thermostatic bath at 30°C using the Ubbelohde viscometer. Then, the inherent viscosity η was determined based on the following equation.

$$\text{Inherent viscosity } \eta = (1/C) \cdot \ln(\eta_1/\eta_0)$$

Preparation Example of Binder C1 (VDF/HFP/MMM)

An autoclave with a volume of 2 L was charged with 240.2 parts by mass of ion-exchanged water, 0.2 parts by mass of methyl cellulose, 97 parts by mass of vinylidene fluoride (VDF), 3 parts by mass of hexafluoropropylene (HFP), 0.3 parts by mass of monomethyl maleate (MMM), and 0.47 parts by mass of diisopropyl peroxydicarbonate (IPP), and the mixture was polymerized at 26°C. The obtained copolymer was heat-treated at 95°C for 60 minutes, then dehydrated, washed with water, and further dried at 80°C for 20 hours to obtain a binder C1. The binder C1 contained 97.4 mass% of VDF, 2.3 mass% of HFP, and 0.3 mass% of MMM with respect to the total amount of the structural units. The inherent viscosity (η) of the binder C1 was 3.1 dL/g. The amount of each monomer in the binder C1 was calculated as follows: the VDF/HFP ratio was determined by 19F-NMR and the VDF/MMM ratio was calculated using the method described below and then, the amount of each monomer was calculated such that the total amount of VDF, HFP, and MMM was 100 mol%. The VDF/MMM ratio in the polymer (molar ratio of the amount of the structural unit derived from vinylidene fluoride and the amount of the structural unit derived from monomethyl maleate) was calculated based on the calculation method using an IR spectrum and a calibration curve disclosed in WO 2009/084483.

Preparation Example of Binder C2 (VDF/HFP/MMM)

VDF, HFP, and MMM were polymerized in the same manner as in the preparation example of the binder C1, except that the amount of ion-exchanged water was changed to 259 parts by mass, that the amount of methyl cellulose was changed to 0.15 parts by mass, that the amount of VDF was changed to 90 parts by mass, that the amount of HFP was changed to 10 parts by mass, that the amount of MMM was changed to 0.5 parts by mass, and that the amount of IPP was changed to 0.5 parts by mass, to obtain a binder C2. The binder C2 contained 92.5 mass% of VDF, 7.0 mass% of HFP, and 0.5 mass% of MMM with respect to the total amount of the structural units. The inherent viscosity (η) of the binder C2 was 2.6 dL/g.

Preparation Example of Binder C3 (VDF/APS)

VDF and APS were polymerized in the same manner as in the preparation example of the binder C1, except that 231.3 parts by mass of ion-exchanged water, 0.05 parts by mass of methyl cellulose, 99 parts by mass of VDF, 1.0 parts by mass of acryloyloxypropyl succinate (APS), and 0.5 parts by mass of IPP were used, to obtain a binder C3. The binder C3 contained 99.0 mass% of VDF and 1.0 mass% of APS with respect to the total amount of the structural units. The inherent

viscosity (η) of the binder C3 was 2.5 dL/g.

Preparation Example of Binder C4 (VDF/HFP/APS)

VDF, HFP, and APS were polymerized in the same manner as in the preparation example of the binder C1, except that 273 parts by mass of ion-exchanged water, 0.05 parts by mass of methyl cellulose, 92 parts by mass of VDF, 2 parts by mass of HFP, 0.5 parts by mass of APS, and 0.4 parts by mass of IPP were used, to obtain a binder C4. The binder C4 contained 94.1 mass% of VDF, 5.4 mass% of HFP, and 0.5 mass% of APS with respect to the total amount of the structural units. The inherent viscosity (η) of the binder C4 was 2.1 dL/g.

Preparation Example of Binder C5 (VDF/HFP/APS)

VDF, HFP, and APS were polymerized in the same manner as in the preparation example of the binder C1, except that 256 parts by mass of ion-exchanged water, 0.05 parts by mass of methyl cellulose, 90 parts by mass of VDF, 10 parts by mass of HFP, 0.5 parts by mass of APS, 1.0 parts by mass of IPP, and 0.22 parts by mass of ethyl acetate were used, to obtain a binder C5. The binder C5 contained 91.8 mass% of VDF, 7.7 mass% of HFP, and 0.5 mass% of APS with respect to the total amount of the structural units. The inherent viscosity (η) of the binder C5 was 2.6 dL/g.

Preparation Example of Binder C6 (PVDF)

VDF was polymerized in the same manner as in the preparation example of the binder C1, except that 231.8 parts by mass of ion-exchanged water, 0.05 parts by mass of methyl cellulose, 100 parts by mass of VDF, 0.7 parts by mass of IPP, and 0.7 parts by mass of ethyl acetate were used, to obtain a binder C6. The binder C6 contained 100.0 mass% of VDF with respect to the total amount of the structural units. The inherent viscosity (η) of the binder C6 was 2.1 dL/g.

Preparation Example of Binder C7 (VDF/HFP/MMM)

VDF, HFP, and MMM were polymerized in the same manner as in the preparation example of the binder C1, except that the amount of ion-exchanged water was changed to 290 parts by mass, that the amount of methyl cellulose was changed to 0.1 parts by mass, that the amount of VDF was changed to 85 parts by mass, that the amount of HFP was changed to 15 parts by mass, that the amount of MMM was changed to 0.5 parts by mass, that the amount of IPP was changed to 0.9 parts by mass, and that the amount of ethyl acetate was changed to 0.3 parts by mass, to obtain a binder C7. The binder C7 contained 87.6 mass% of VDF, 11.9 mass% of HFP, and 0.5 mass% of MMM with respect to the total amount of the structural units. The inherent viscosity (η) of the binder C7 was 1.3 dL/g.

Preparation Example of Binder C8 (VDF/HFP)

VDF and HFP were polymerized in the same manner as in the preparation example of the binder C1, except that 253 parts by mass of ion-exchanged water, 0.05 parts by mass of methyl cellulose, 90 parts by mass of VDF, 10 parts by mass of HFP, 0.4 parts by mass of IPP, and 1.0 parts by mass of ethyl acetate were used, to obtain a binder C8. The binder C8 contained 93.0 mass% of VDF and 7.0 mass% of HFP with respect to the total amount of the structural units. The inherent viscosity (η) of the binder C8 was 1.9 dL/g.

Detailed information of the obtained binders C1 to C8 is shown in Table 1.

[Table 1]

| Binder (C) | Composition | Content (mass%) of structural unit derived from each monomer | | | | η(dL/g) |
|---|---|---|---|---|---|---|
| | | VDF | HFP | MMM | APS | |
| C1 | VDF/HFP/MMM | 97.4 | 2.3 | 0.3 | - | 3.1 |
| C2 | VDF/HFP/MMM | 92.5 | 7.0 | 0.5 | - | 2.6 |
| C3 | VDF/APS | 99.0 | - | - | 1.0 | 2.5 |
| C4 | VDF/HFP/APS | 94.1 | 5.4 | - | 0.5 | 2.1 |
| C5 | VDF/HFP/APS | 91.8 | 7.7 | - | 0.5 | 2.6 |

(continued)

| Binder (C) | Composition | Content (mass%) of structural unit derived from each monomer | | | | η(dL/g) |
|---|---|---|---|---|---|---|
| | | VDF | HFP | MMM | APS | |
| C6 | PVDF | 100.0 | - | - | - | 2.1 |
| C7 | VDF/HFP/MMM | 87.6 | 11.9 | 0.5 | - | 1.3 |
| C8 | VDF/HFP | 93.0 | 7.0 | - | - | 1.9 |

In Examples and Comparative Examples, the following D1 was used as the conductive auxiliary (D).

D1: Carbon nanotube (CNT) dispersion

In Examples and Comparative Examples, the following S1 was used as the nonaqueous solvents (S).

S1: N-methyl-2-pyrrolidone (NMP)

Preparation of Positive Electrode Slurry

Each binder (C) was dispersed in N-methyl-2-pyrrolidone (NMP) at room temperature to make the concentration of the binder (C) to be a target concentration, and then the solution temperature was raised to 50°C to dissolve each binder (C) (hereinafter, referred to as "binder solution"). The positive electrode active material (A), the solid electrolyte (B), the conductive auxiliary (D), and each of the binder solutions described above were used, and the components were mixed to attain a ratio of the positive electrode active material (A)/the solid electrolyte (B)/the conductive auxiliary (D)/the binder (C) of 90/10/2/10 (mass%) to obtain each positive electrode slurry. A solid content of the positive electrode slurry was adjusted using NMP.

Positive electrode production

Each of the obtained positive electrode slurries was applied to an aluminum foil (thickness: 15 μm) and then dried at 120°C. Each of the obtained preliminary positive electrodes was pressed and further heat-treated at 120°C for 3 hours. Thus, each positive electrode having an electrode bulk density of 2.3 g/cm$^3$ and a basis weight of 200 g/m$^2$ was obtained.

Evaluation

A peel strength of each of the obtained positive electrodes was measured according to the following method.

Peel strength

Each of the obtained positive electrodes was cut into a size of 2.0 cm × 5.0 cm, a double-sided tape was attached to the positive electrode active material layer side of each positive electrode, and the positive electrode active material layer and an acrylic plate were bonded to each other, and then pressed at 4 MPa for 20 seconds. Half of the aluminum foil of the positive electrode fixed on the acrylic plate was peeled off, and the positive electrode was sandwiched between the clamps, followed by measurement in accordance with JIS K6854-1. The measurement conditions were a head speed of 10 mm/min and a clamp-to-clamp distance of 10 mm, and the measurement was performed by 90°C peeling. The results are indicated in Table 2.

[Table 2]

| Positive electrode active material layer | Positive electrode active material (A) | Solid electrolyte (B) | Binder (C) | Conductive auxiliary (D) | Peel strength (gf/mm) |
|---|---|---|---|---|---|
| | Type/parts by mass | Type/parts by mass | Type/parts by mass | Type/parts by mass | |
| Example 1 | A1/90 | B1/10 | C1/10 | D1/2 | 209.6 |
| Example 2 | A1/90 | B1/10 | C2/10 | D1/2 | 213.6 |
| Example 3 | A1/90 | B1/10 | C3/10 | D1/2 | 172.7 |

(continued)

| Positive electrode active material layer | Positive electrode active material (A) | Solid electrolyte (B) | Binder (C) | Conductive auxiliary (D) | Peel strength (gf/mm) |
|---|---|---|---|---|---|
| | Type/parts by mass | Type/parts by mass | Type/parts by mass | Type/parts by mass | |
| Example 4 | A1/90 | B1/10 | C4/10 | D1/2 | 107.5 |
| Example 5 | A1/90 | B1/10 | C5/10 | D1/2 | 187.6 |
| Comparative Example 1 | A1/90 | B1/10 | C6/10 | D1/2 | 42.1 |
| Comparative Example 2 | A1/90 | B1/10 | C7/10 | D1/2 | 67.4 |
| Comparative Example 3 | A1/90 | B1/10 | C8/10 | D1/2 | 20.9 |

From Table 2, the peel strength was only 67.4 gf/mm, at most, in the positive electrodes of Comparative Examples 1 to 3 including positive electrode active material layers containing the binder C6 (PVDF) which is a homopolymer of vinylidene fluoride, the binder C7 (VDF/HFP/MMM) containing less than 90 mass% of the structural unit (C-a) derived from vinylidene fluoride, and the binder C8 (VDF/HFP) not containing the structural unit (C-b) derived from a monomer other than vinylidene fluoride, respectively. On the other hand, as shown in Examples 1 to 5, the peel strength was 107.5 gf/mm and the adhesiveness was found to be greatly improved, in the positive electrode active material layers including the binders C1 to C5 containing the structural unit (C-a) derived from vinylidene fluoride and the specific structural unit (C-b) derived from a monomer other than vinylidene fluoride and having a content of the structural unit (C-a) of 90 mass% or more.

## Claims

**1.** A positive electrode active material layer comprising: a positive electrode active material (A); a solid electrolyte (B); and a binder (C), wherein

the binder (C) is a vinylidene fluoride copolymer containing a structural unit (C-a) derived from vinylidene fluoride and a structural unit (C-b) derived from a monomer other than vinylidene fluoride, and
the structural unit (C-b) derived from a monomer other than vinylidene fluoride contains a structural unit derived from at least one selected from an unsaturated dibasic acid, an unsaturated dibasic acid monoester, and a compound represented by the following formula (C-1), and
an amount of the structural unit (C-a) derived from vinylidene fluoride is 90.0 mass% or more when a total amount of the structural units contained in the vinylidene fluoride copolymer is 100.0 mass%:

[Chem. 1]

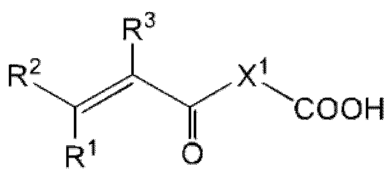

...(C-1)

where $R^1$, $R^2$ and $R^3$ are each independently a hydrogen atom, a chlorine atom or an alkyl group having from 1 to 5 carbon atoms; and $X^1$ is an atomic group having a main chain constituted of from 1 to 19 atoms and having a molecular weight of 472 or less, and containing at least one heteroatom selected from an oxygen atom and a nitrogen atom.

**2.** The positive electrode active material layer according to claim 1, wherein the vinylidene fluoride copolymer has an inherent viscosity of 2.3 dL/g or more.

**3.** The positive electrode active material layer according to claim 2, wherein the vinylidene fluoride copolymer contains a

structural unit derived from hexafluoropropylene as a structural unit different from the structural unit (C-b), and an amount of the structural unit derived from hexafluoropropylene is 2.0 mass% or more and 8.0 mass% or less when the total amount of the structural units contained in the vinylidene fluoride copolymer is 100.0 mass%.

**4.** The positive electrode active material layer according to any one of claims 1 to 3, wherein the structural unit (C-b) derived from a monomer other than vinylidene fluoride contains the structural unit derived from an unsaturated dibasic acid monoester, and
the unsaturated dibasic acid monoester is monomethyl maleate.

**5.** The positive electrode active material layer according to claim 1 or 2, wherein the solid electrolyte (B) is an oxide-based solid electrolyte.

**6.** The positive electrode active material layer according to claim 5, wherein the solid electrolyte (B) contains a material represented by the following formula (B-1):

$$Li_{1+x+y}Al_xTi_{2x}Si_yP_{3y}O_{12} \qquad (B\text{-}1)$$

where x and y satisfy $0 \leq x \leq 1$ and $0 \leq y \leq 1$.

**7.** The positive electrode active material layer according to any one of claims 1 to 3, wherein the positive electrode active material (A) contains a lithium metal phosphate, and
the lithium metal phosphate is selected from the group consisting of $LiFePO_4$, $LiMnPO_4$, $LiCoPO_4$, and $LiNiPO_4$.

**8.** An electrode comprising: a current collector; and the positive electrode active material layer described in any one of claims 1 to 3.

**9.** A semi-solid-state battery or all-solid-state battery, comprising the electrode described in claim 8.

**INTERNATIONAL SEARCH REPORT**

International application No.
**PCT/JP2023/026597**

**A. CLASSIFICATION OF SUBJECT MATTER**

***H01M 4/13***(2010.01)i; ***H01M 4/58***(2010.01)i; ***H01M 4/62***(2006.01)i; ***H01M 10/052***(2010.01)i; ***H01M 10/0562***(2010.01)i
FI: H01M4/13; H01M4/62 Z; H01M4/58; H01M10/0562; H01M10/052

According to International Patent Classification (IPC) or to both national classification and IPC

**B. FIELDS SEARCHED**

Minimum documentation searched (classification system followed by classification symbols)

H01M4/13; H01M4/58; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-194202 A (SONY CORP) 02 August 2007 (2007-08-02) claims, paragraphs [0044]-[0052] | 1-9 |
| A | JP 2003-317722 A (KUREHA CHEMICAL IND CO LTD) 07 November 2003 (2003-11-07) claims | 1-9 |
| A | WO 2020/059806 A1 (MURATA MANUFACTURING CO) 26 March 2020 (2020-03-26) paragraph [0031] | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 October 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/026597**

| Patent document cited in search report | Publication date (day/month/year) | Patent family member(s) | Publication date (day/month/year) |
|---|---|---|---|
| JP 2007-194202 A | 02 August 2007 | US 2007/0141469 A1<br>claims, paragraphs [0058]-[0065]<br>CN 1988222 A<br>KR 10-2007-0065803 A | |
| JP 2003-317722 A | 07 November 2003 | (Family: none) | |
| WO 2020/059806 A1 | 26 March 2020 | US 2021/0175487 A1<br>paragraph [0036]<br>CN 112567548 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020113444 A
- JP 2020126807 A
- WO 2009084483 A